# EUROPÄISCHE PATENTANMELDUNG

(11) **EP 2 333 362 A1**
(43) Veröffentlichungstag der Anmeldung: **15.06.2011**
(21) Anmeldenummer: 10192386.0
(22) Anmeldetag: 24.11.2010
(51) Int. Cl.: F16C 11/06, F16C 23/04

(54) **Abdichtung Gelenklager**

(30) Priorität: 09.12.2009 DE 102009057453
(71) Anmelder: Schaeffler Technologies GmbH & Co. KG, 91074 Herzogenaurach (DE)
(72) Erfinder: Krome, Andreas, 91097 Oberreichenbach (DE)

(57) **Zusammenfassung**

Die Erfindung betrifft ein Gelenklager (1), umfassend einen Innenring (2) mit einer sphärisch gewölbten inneren Lagerfläche (3) sowie einen Außenring (4) mit einer sphärisch gewölbten äußeren Lagerfläche (5). Um ein derartiges Gelenklager bereitzustellen, das eine einfache und kostengünstige Abdichtung gegenüber der Umwelt aufweist, wobei die Abdichtung einfach zu montieren ist, wird vorgeschlagen, zumindest einen V-Ring (9, 10) zum Abdichten der inneren und äußeren Lagerfläche (3, 5) gegenüber der Umwelt (8) einzusetzen.

## Beschreibung

### Gebiet der Erfindung

Die Erfindung betrifft ein Gelenklager, umfassend einen Innenring mit einer sphärisch gewölbten inneren Lagerfläche sowie einen Außenring mit einer sphärisch gewölbten äußeren Lagerfläche. Derartige Gelenklager, z.B. Radialgelenklager, können zum gelenkigen Verbinden von Wagenkästen eines mehrgliedrigen Fahrzeuges eingesetzt werden.

### Stand der Technik

Gelenklager müssen in den meisten Fällen abgedichtet werden, damit von außen keine Verunreinigungen in die Lager eindringen können. Derartige Verunreinigungen können z. B. Wasser, Wasserdampf, Stäube, Eis, Schnee, Schmiermittel (Öle, Fette, Festschmierstoffe) und Farben sein. Durch die Verunreinigungen wird die Korrosion der Lagerbauteile beschleunigt, das Schmiermittel oder das Gleitmaterial (bei wartungsfreien Lagern) verunreinigt oder herausgespült und abrasive Partikel werden in die Gleitzonen des Lagers hineingefördert, was den Lagerverschleiß erhöht und damit die Lagerlebensdauer reduziert. Wartungsfreie Gelenklager dürfen insbesondere nicht durch Fette, Öle oder sonstige Schmierstoffe verunreinigt werden, da sonst eine drastische Lebensdauerreduzierung die Folge sein kann. Die Wirksamkeit der Abdichtung kann daher die Gebrauchsdauer der Lager entscheidend beeinflussen.

Aus der DE 94 20 230 U1 ist ein Radialgelenklager bekannt, umfassend einen Innenring mit einer konvexen Lagerfläche einen Außenring mit einer konkaven Lagerfläche, wobei der Innenring mit einem ersten Gehäuseelement drehfest und verschiebefest verbunden ist und der Außenring mit einem zweiten Gehäuseelement drehfest und verschiebefest verbunden ist. Um die Lagerflächen gegenüber der Umwelt abzudichten, schlägt die DE 94 20 230 U1 vor, eine Faltenbalgdichtung zwischen dem ersten Gehäuseelement und dem zweiten Gehäuseelement vorzusehen. Nachteilig beim Einsatz von Faltenbalgdichtungen ist, dass diese aufgrund hoher Werkzeugkosten relativ teuer herzustellen sind und aufgrund ihrer komplexen Form und des oft sehr begrenzten Bauraums in Gelenklagern schwierig zu montieren sind. Nachteilig beim Einsatz von Faltenbalgdichtungen in Gelenklagern (z.B. zum Verbinden von Wagenkästen) ist weiterhin, dass im Betrieb auftretende Drehungen um eine vertikale Lagerachse (z.B. bei Kurvenfahrten) eine Verdrehung der Faltenbalgdichtung um deren Rotationsachse mit resultierendem Verschleiß bedeutet.

Ferner sind im Stand der Technik sogenannte V-Ringe als Dichtungselemente bekannt. Ein V-Ring stellt eine axiale Lippendichtung für z.B. Wellenabdichtungen oder Wälzlagerabdichtungen dar. Ein V-Ring kann dabei ohne großen Montageaufwand durch Aufschieben auf die Welle montiert werden und dichtet an einer entsprechenden Anlauffläche, z.B. einem Wellenbund oder einer Stirnseite eines Wälzlagers, ab.

Ein V-Ring weist einen rotationssymmetrischen Korpus auf, umfassend einen Dichtungskörper der mittels eines Gelenks mit einer Dichtlippe verbunden ist. In einer Querschnittsdarstellung weist der Dichtungskörper z.B. einen trapezförmigen oder rechteckigen Querschnitt auf, während die Dichtlippe konisch zulaufend ausgebildet ist. Das Gelenk stellt eine federnde Verbindung von Dichtungskörper und Dichtlippe dar.

### Aufgabe der Erfindung

Der Erfindung liegt die Aufgabe zugrunde, ein gattungsgemäßes Gelenklager bereitzustellen, das eine einfache und kostengünstige Abdichtung gegenüber der Umwelt aufweist, wobei die Abdichtung einfach zu montieren ist.

### Zusammenfassung der Erfindung

Die Aufgabe wird durch ein Gelenklager gemäß dem unabhängigen Anspruch gelöst. Demzufolge ist ein gattungsgemäßes Gelenklager gekennzeichnet durch zumindest einen V-Ring zum Abdichten der inneren und äußeren Lagerfläche gegenüber der Umwelt.

Das erfindungsgemäße Gelenklager umfasst einen Innenring der gegenüber einem Außenring verdreht und verschwenkt werden kann. Hierzu weisen Innenring und Außenring komplementäre und zusammenwirkende Lagerflächen auf; z.B. kann der Innenring eine konvexe, sphärische Lagerfläche aufweisen, während der Außenring eine konkave, sphärische Lagerfläche aufweist. Sofern es sich um ein Radialgelenklager zum gelenkigen Verbinden von Wagenkästen eines mehrgliedrigen Fahrzeuges handelt, weist das Radialgelenklager eine senkrecht also vertikal angeordnete Lagerachse auf. Die Lagerflächen sind vorzugsweise rotationssymmetrisch um die Lagerachse angeordnet.

Die Lagerflächen können bezüglich eines Drehmittelpunkts des Gelenklagers vertikal symmetrisch oder asymmetrisch angeordnet sein. Bei einer asymmetrischen Anordnung weist das Gelenklager eine vertikale Vorzugsrichtung auf, in der eine höhere Vertikalkraft aufgenommen werden kann.

Erfindungsgemäß wird das Gelenklager durch zumindest einen V-Ring abgedichtet. Der V-Ring schützt dabei die inneren und äußeren Lagerflächen vor Umwelteinflüssen und stellt ein berührende Dichtung dar.

Bei einer senkrechten Lagerachse ist das erfindungsgemäße Gelenklager vorzugsweise an zwei axialen Enden, also an einer Oberseite und einer Unterseite, durch je einen V-Ring abgedichtet.

Bevorzugte Ausführungsformen sind in den Unteransprüchen angegeben.

Gemäß einer Ausführungsform ist ein Dichtungskörper des V-Rings auf einem Absatz des Innenrings zwischen dem Innenring und einem ersten Gehäuseelement angeordnet. Vorzugsweise ist der Absatz in eine Stirnseite des Innenrings eingebracht. Weiter vorzugsweise ist eine axiale Erstreckung des Absatzes geringfügig, z.B. 0,5 mm - 2,0 mm, kleiner als eine axiale Erstreckung des V-Rings in einem nicht eingebauten Zustand. Dadurch kann der V-Ring nach dem Einsetzen in den Absatz durch ein weiteres Element, das bündig mit der Stirnseite des Innenrings abschließt, eingeklemmt werden. So ist bevorzugt vorgesehen, dass ein erstes Gehäuseelement mit einer Stirnseite des Innenrings bündig abschließt, so dass sich zwischen erstem Gehäuseelement und Innenring im Bereich des Absatzes eine umlaufende Nut ergibt, in der der V-Ring angeordnet und eingeklemmt ist.

Alternativ kann für den V-Ring oder zusätzlich für ein weiteren V-Ring vorgesehen sein, dass ein Dichtungskörper des V-Rings zwischen einer Stützscheibe und einem ersten Gehäuseelement angeordnet ist. Die Stützscheibe wiederum kann an dem Innenring anliegen, so dass der V-Ring letztendlich zwischen Innenring und erstem Gehäuseelement fixiert wird. Der Einsatz einer Stützscheibe ermöglicht das Anpassen von axialen Abständen, um z.B. identische V-Ringe für eine obere und untere Abdichtung einsetzen zu können. Viel wichtiger jedoch ist der Vorteil, dass durch einen Stützring die mögliche Abstützfläche für den V-Ring den Erfordernissen angepasst werden kann.

Gemäß einer weiteren Ausführungsform ist vorgesehen, dass eine Dichtlippe des V-Rings mit einer auf einem zweiten Gehäuseelement, dem Innenring oder dem Außenring ausgebildeten Anlauffläche zusammenwirkt. Insbesondere soll die Dichtlippe die Anlauffläche kontaktieren. Gegenüber Dichtungen, die eine Anlauffläche direkt auf dem Innenring und/oder dem Außenring aufweisen, kann vorteilhafterweise eine Trennung der Funktionen Lagerfläche und Anlauffläche auf unterschiedliche Maschinenelemente erfolgen; hierdurch wird die jeweilige Bearbeitung vereinfacht. Die Anlauffläche stellt einen Bereich für einen schleifenden Kontakt der Dichtlippe bereit und wird vorzugsweise entsprechend bearbeitet. So kann die Anlauffläche einen Oberflächenbereich mit erhöhter Bearbeitungsqualität darstellen (geringere Gestaltungsabweichungen). Insbesondere kann gemäß einer weiteren Ausführungsform vorgesehen sein, dass eine Dichtlippe des V-Rings mit einer auf an einem zweiten Gehäuseelement, dem Innenring oder dem Außenring angeordneten Dichtscheibe ausgebildeten Anlauffläche zusammenwirkt. Die Dichtscheibe weist hierbei die notwendigen Gestaltungsabweichungen (Rauigkeit, Ebenheit, Härte, etc.) sowie Abriebbeständigkeit auf und kann z.B. in einem Absatz des zweiten Gehäuseelements angeordnet sein. Die Dichtscheibe stellt ein gegenüber dem Innenring, dem Außenring, dem ersten und dem zweiten Gehäuseelement separates Maschinenelement dar. Vorzugsweise ist die Dichtscheibe eine Niro-Axialscheibe und weist eine gute Korrosionsbeständigkeit und Oberflächengüte auf. Die Dichtscheibe kann durch Kleben, Verschrauben und/oder Klemmen mit dem zweiten Gehäuseelement verbunden werden. Kleben ist gegenüber Verschrauben zu bevorzugen, da die Abmaße der Dichtscheibe reduziert und deren Kosten somit verringert werden können.

Gemäß einer weiteren Ausführungsform ist vorgesehen, dass das Gelenklager eine vertikal stehende Lagerachse aufweist und dass die Anlauffläche eines V-Rings radial nach außen hin abfällt. Sich im Bereich des Kontakts zwischen Dichtlippe und Anlauffläche befindliches Wasser, z.B. Spritzwasser, läuft somit gravitationsbedingt von dem Kontakt weg.

Typischerweise besteht des V-Ring aus einer gummielastischen Masse, um mittels des Gelenks die Dichtlippe stets in Kontakt mit einer Anlauffläche zu halten. Bevorzugt ist vorgesehen, dass der V-Ring den Werkstoff TPU umfasst. Bei TPU handelt es sich um ein thermoplastisches Polyurethanelastomer.

Gemäß einer weiteren Ausführungsform ist vorgesehen, dass das Gelenklager, insbesondere ein Gehäuseelement des Gelenklagers, eine Abtropfkante aufweist.

Aufgrund des Einsatzes eines oder zweier V-Ringe, kann eine besonders platzsparende Abdichtung ermöglicht werden. Insbesondere ist es möglich herkömmliche V-Ringe, die in Wellenabdichtungen oder Lagerabdichtungen eingesetzt werden, zu verwenden. Bevorzugt ist vorgesehen, dass das Gelenklager durch zwei identische V-Ringe abgedichtet wird.

Das erfindungsgemäße, abgedichtete Gelenklager eignet sich insbesondere zur Verwendung in einer Gelenkverbindung von Wagenkästen, z.B. bei Straßenbahnen. Demzufolge ist in einer bevorzugten Ausführungsform vorgesehen, dass das Gelenklager ein Radialgelenklager zum gelenkigen Verbinden von Wagenkästen eines mehrgliedrigen Fahrzeuges ist.

### Kurze Beschreibung der Zeichnungen

Ausführungsbeispiele der Erfindung werden anhand der beiliegenden Figuren erläutert. Dabei zeigen:

| | |
|---|---|
| Figur 1 | ein erfindungsgemäßes Gelenklager nach einem ersten Ausführungsbeispiel, |
| Figur 2 | ein erfindungsgemäßes Gelenklager nach einem zweiten Ausführungsbeispiel und |
| Figur 3 | ein erfindungsgemäßes Gelenklager nach einem dritten Ausführungsbeispiel. |

Gleiche oder funktionsgleiche Elemente sind in den Figuren mit gleichen Bezugszeichen versehen.

### Detaillierte Beschreibung der Zeichnungen

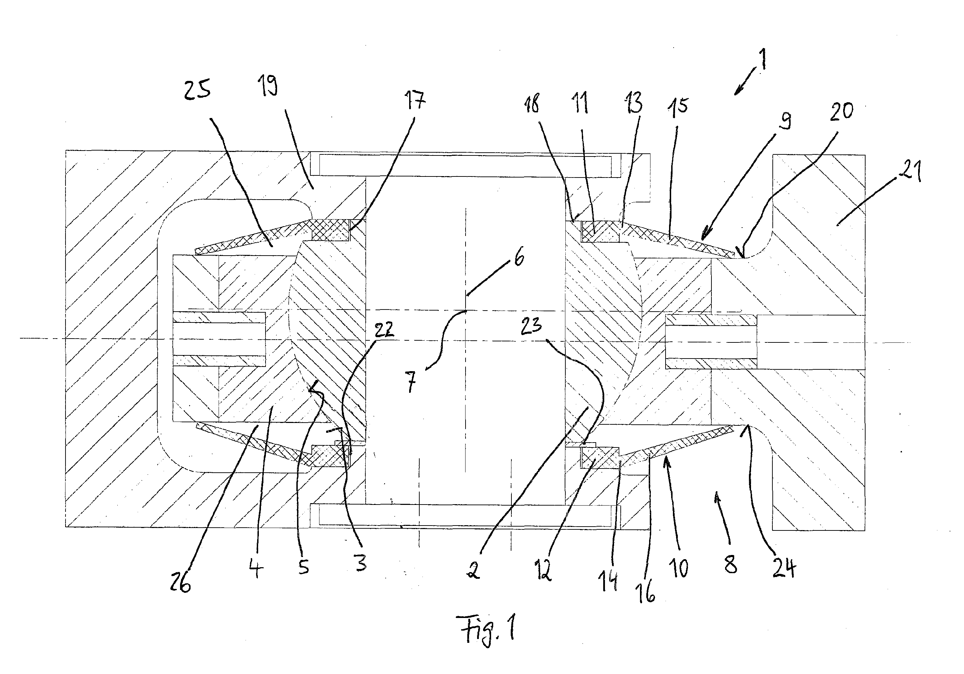

Dargestellt in Figur 1 ist eine Schnittdarstellung durch ein erfindungsgemäßes Gelenklager 1 nach einem ersten Ausführungsbeispiel.

Das Gelenklager 1 umfasst einen Innenring 2 mit einer konvex gewölbten sphärischen inneren Lagerfläche 3 sowie einen Außenring 4 mit einer konkav gewölbten sphärischen äußeren Lagerfläche 5. Zwischen der inneren Lagerfläche 3 und der äußeren Lagerfläche 5 kann sich eine nicht dargestellte Gleitschicht befinden. Beide Lagerringe 2, 4 sind rotationssymmetrisch bezüglich einer vertikal angeordneten Lagerachse 6 ausgebildet; insbesondere sind die Lagerflächen 3, 5 rotationssymmetrisch bezüglich der Lagerachse 6 angeordnet. Die Lagerflächen 3, 5 sind vertikal in Bezug auf einen Drehmittelpunkt 7 des Gelenklagers 1 asymmetrisch angeordnet.

Die Lagerflächen 3, 5 sind gegenüber der Umwelt 8 durch zwei Dichtungen abgedichtet. Genauer gesagt befinden sich an sowohl einem oberen Ende als auch an einem unteren Ende der Gelenklagerung, insbesondere der Lagerflächen 3, 5, jeweils eine Dichtung in Form eines V-Rings 9, 10. Jeder V-Ring 9, 10 besteht aus einem Dichtungskörper 11, 12, einem Gelenk 13, 14 sowie einer Dichtlippe 15, 16 und besteht aus dem Material PTU.

Der oben angeordnete V-Ring 9 sitzt mit seinem Dichtungskörper 11 auf einem Absatz 17 einer Stirnfläche 18 des Innenrings 2. Eine Tiefe des Absatzes bezogen auf die Stirnfläche 18 entspricht im Wesentlichen einer in gleicher Richtung gemessenen Höhe des Dichtungskörpers 11 abzüglich eines geringen Klemmmaßes. Das Klemmmaß ist so bemessen, dass im zusammengebauten Zustand des Gelenklagers 1 ein mit der Stirnfläche 18 bündiger, und sich radial über den Absatz 17 erstreckender Körper den gummielastischen Dichtungskörper 11 elastisch verformt und dadurch gegenüber dem Innenring 2 fixiert. Unter Fixierung wird hierbei ein drehfester und verschiebefester Sitz verstanden. Der Dichtungskörper 11 wird gemäß Figur 1 durch ein erstes Gehäuseelement 19, das bündig mit der Stirnfläche 18 abschließt, fixiert.

Die Dichtlippe 15 des oberen V-Rings 9 wirkt mit einer Anlauffläche 20 zusammen, insbesondere kontaktiert die Dichtlippe 15 diese Anlauffläche 20 in jeder möglichen Betriebssituation, d.h. bei jeder möglichen Verdrehung und Verschwenkung des Gelenklagers 1. Die Anlauffläche 20 ist direkt auf einem zweiten Gehäuseelement 21 ausgebildet.

Der Dichtungskörper 12 des unteren V-Rings 10 ist auf einem Absatz 22 des ersten Gehäuseelements 19 angeordnet und wird zwischen dem ersten Gehäuseelement 19 und einer Stützscheibe 23 gehalten. Ebenso wie der obere V-Ring 9 wird auch hier der Dichtungskörper 12 durch Klemmen fixiert. Die Stützscheibe 23 erstreckt sich radial soweit, dass der Dichtungskörper 12 sicher fixiert werden kann. Der Einsatz einer Stützscheibe 23 ist somit insbesondere bei einem asymmetrischen Gelenklager 1 sinnvoll, wenn nämlich der Innenring 2 an einem axialen Ende des Gelenklagers keine ausreichende Anlagefläche für den Dichtungskörper 12 bereitstellen kann.

Die Dichtlippe 16 des unteren V-Rings 10 liegt an einer direkt am zweiten Gehäuseelement 21 ausgebildeten Anlauffläche 24 an.

Die beiden V-Ringe 9, 10 stellen identische Dichtungselemente dar, insbesondere handelt es sich um handelsübliche Dichtungselemente. Durch die V-Ringe 9, 10 sind die Lagerflächen 3, 5 von der Umwelt 8 komplett abgeschottet, d.h. die sich ergebenden Dichträume 25, 26 sind von der Umwelt 8 hermetisch abgeschirmt.

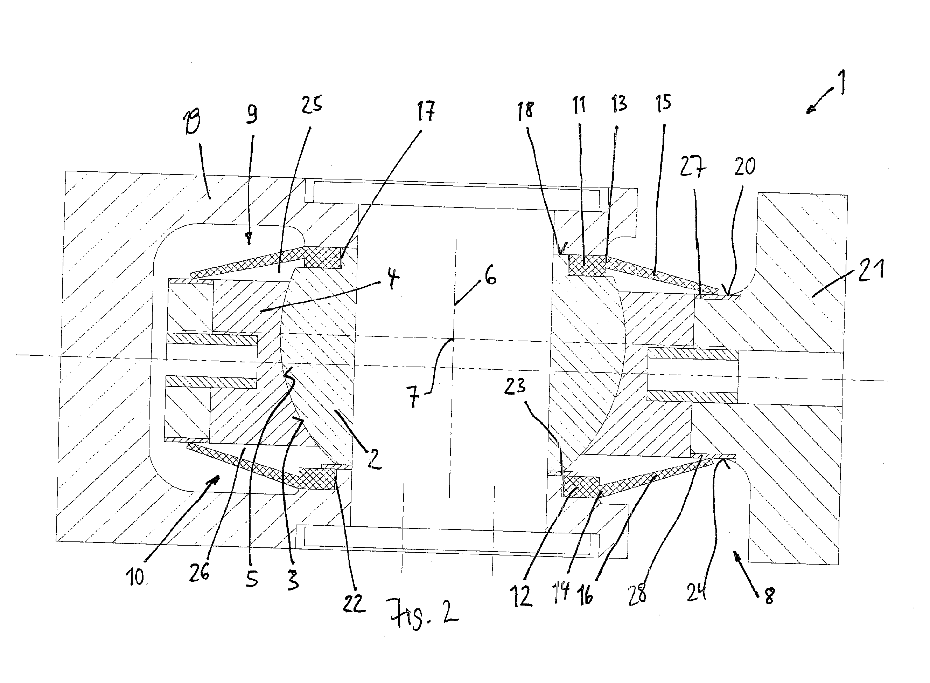

Figur 2 zeigt ein erfindungsgemäßes Gelenklager 1 nach einem zweiten Ausführungsbeispiel. Im Gegensatz zum Gelenklager 1 nach Figur 1, sind die Anlaufflächen 20, 24 nicht direkt an dem zweiten Gehäuseelement 21 ausgebildet. Vielmehr wurden in das zweite Gehäuseelement 21 separate Dichtscheiben 27, 28 eingesetzt. Die Dichtscheiben 27, 28 sind auf des zweite Gehäuseelement 21 geklebt.

Die Größe der Dichtscheiben 27, 28 ist so bemessen, dass in jeder Betriebssituation die Dichtlippen 15, 16 stets in Kontakt mit den Dichtscheiben 27, 28 stehen.

Die Dichtscheiben 27, 28 weisen spezielle Oberflächen als Anlaufflächen 20, 24 auf, um eine möglichst geringe Reibung zwischen Dichtlippen 15, 16 und Anlaufflächen 20, 24 sowie eine möglichst dichte Abdichtung zu erzielen. Insbesondere handelt es sich hierbei um Niro-Scheiben.

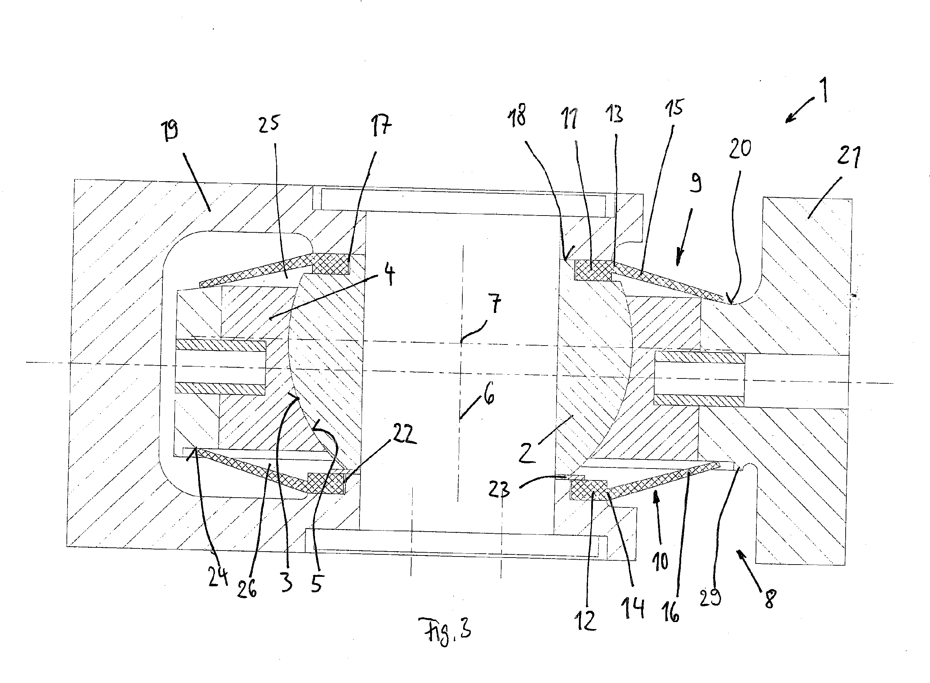

Figur 3 zeigt ein erfindungsgemäßes Gelenklager 1 nach einem dritten Ausführungsbeispiel. Im Gegensatz zum Gelenklager 1 nach Figur 1, fällt die Anlauffläche 20 des oberen V-Rings 9 radial von innen nach außen gesehen ab. Die Anlauffläche 20 ist somit nicht mehr auf einer zur Lagerachse 6 senkrecht stehenden Ebene angeordnet. Vielmehr befindet sich die die Anlauffläche 20 auf einer konisch um die Lagerachse 6 verlaufenden Fläche.

Es zeigte sich, dass eine derartige Neigung der Anlauffläche 20 - trotz des höheren Fertigungsaufwands - große Vorteile bringt: So fließt im Bereich des Kontakts von Dichtlippe 15 und Anlauffläche 20 befindliches Wasser gravitationsbedingt von dem Kontakt weg und bleibt dort nicht stehen. Die Dichtwirkung kann dadurch erhöht werden.

Grundsätzlich könnte eine entsprechende Neigung auch an der unteren Anlauffläche 24 vorgesehen sein.

An dem unteren Ende des Gelenklagers 1 befindet sich eine umlaufende Abtropfkante 29. Von oben abfließendes Wasser wird hierdurch von dem Kontakt zwischen Dichtlippe 16 und Anlauffläche 24 fern gehalten.

### Bezugszeichenliste

- 1: Gelenklager
- 2: Innenring
- 3: innere Lagerfläche
- 4: Außenring
- 5: äußere Lagerfläche
- 6: Lagerachse
- 7: Drehmittelpunkt
- 8: Umwelt
- 9: V-Ring
- 10: V-Ring
- 11: Dichtungskörper
- 12: Dichtungskörper
- 13: Gelenk
- 14: Gelenk
- 15: Dichtlippe
- 16: Dichtlippe
- 17: Absatz
- 18: Stirnfläche
- 19: erstes Gehäuseelement
- 20: Anlauffläche
- 21: zweites Gehäuseelement
- 22: Absatz
- 23: Stützscheibe
- 24: Anlauffläche
- 25: Dichtungsraum
- 26: Dichtungsraum
- 27: Dichtscheibe
- 28: Dichtscheibe
- 29: Abtropfkante

## Patentansprüche

1. Gelenklager (1), umfassend einen Innenring (2) mit einer sphärisch gewölbten inneren Lagerfläche (3) sowie einen Außenring (4) mit einer sphärisch gewölbten äußeren Lagerfläche (5), **gekennzeichnet durch** zumindest einen V-Ring (9, 10) zum Abdichten der inneren und äußeren Lagerfläche (3, 5) gegenüber der Umwelt (8).

2. Gelenklager (1) nach Anspruch 1, **dadurch gekennzeichnet, dass** ein Dichtungskörper (11) des V-Rings (9) auf einem Absatz (17) des Innenrings (2) zwischen dem Innenring (2) und einem ersten Gehäuseelement (19) angeordnet ist.

3. Gelenklager (1) nach Anspruch 1 oder 2, **dadurch gekennzeichnet, dass** ein Dichtungskörper (12) des V-Rings (10) zwischen einer Stützscheibe (23) und einem ersten Gehäuseelement (19) angeordnet ist.

4. Gelenklager (1) nach einem der vorangegangenen Ansprüche, **dadurch gekennzeichnet, dass** eine Dichtlippe (15, 16) des V-Rings (9, 10) mit einer auf einem zweiten Gehäuseelement (21), dem Innenring (2) oder dem Außenring (4) ausgebildeten Anlauffläche (20, 24) zusammenwirkt.

5. Gelenklager (1) nach einem der vorangegangenen Ansprüche, **dadurch gekennzeichnet, dass** eine Dichtlippe (15, 16) des V-Rings (9, 10) mit einer auf an einem zweiten Gehäuseelement (21), dem Innenring (2) oder dem Außenring (4) angeordneten Dichtscheibe (27, 28) ausgebildeten Anlauffläche (20, 24) zusammenwirkt.

6. Gelenklager (1) nach Anspruch 4 oder 5, **dadurch gekennzeichnet, dass** das Gelenklager (1) eine vertikal stehende Lagerachse (6) aufweist und dass die Anlauffläche (20) eines V-Rings (9) radial nach außen hin abfällt.

7. Gelenklager (1) nach einem der vorangegangenen Ansprüche, **dadurch gekennzeichnet, dass** der V-Ring (9, 10) den Werkstoff TPU umfasst.

8. Gelenklager (1) nach einem der vorangegangenen Ansprüche, **dadurch gekennzeichnet, dass** das Gelenklager (1) eine Abtropfkante (29) aufweist.

9. Gelenklager (1) nach einem der vorangegangenen Ansprüche, **dadurch gekennzeichnet, dass** das Gelenklager (1) ein Radialgelenklager zum gelenkigen Verbinden von Wagenkästen eines mehrgliedrigen Fahrzeuges ist.
